Europäisches Patentamt

European Patent Office

Office européen des brevets

(11) Publication number: **0 226 375**
A1

# (12) EUROPEAN PATENT APPLICATION

(21) Application number: **86309348.0**

(22) Date of filing: **01.12.86**

(51) Int. Cl.⁴: **A 23 L 1/182**
**A 23 L 1/168**

(30) Priority: **02.12.85 US 803189**

(43) Date of publication of application:
**24.06.87 Bulletin 87/26**

(84) Designated Contracting States:
**DE GB IT SE**

(71) Applicant: **GENERAL FOODS CORPORATION**
**250 North Street**
**White Plains, N.Y. 10625(US)**

(72) Inventor: **Scelia, Richard P.**
**27, High Acres Drive**
**Thornwood New York, 10594(US)**

(72) Inventor: **Hegedus, Elizabeth**
**347, Martling Avenue**
**Tarrytown New York, 10591(US)**

(72) Inventor: **Giacone, Joseph**
**10, Columbia Place**
**Princeton Junction New Jersey 08550(US)**

(72) Inventor: **Bruins, Henderikus B.**
**RR1 Box 153B**
**Cream Ridge New Jersey 08514(US)**

(72) Inventor: **Benjamin, Earl J.**
**150, Beechmont Drive**
**New Rochelle New York 10804(US)**

(74) Representative: **Baillie, Iain Cameron et al,**
**c/o Ladas & Parry Isartorplatz 5**
**D-8000 München 2(DE)**

(54) **Extruded quick-cooking rice-like product.**

(57) The present invention teaches the preparation of a quick-cooking rice-like product comprising: feeding ungelatinized rice flour into an extruder under conditions sufficient to substantially gelatinize the starch molecules and denature the protein, and drying the extrudate to form a rehydratable product.

EP 0 226 375 A1

## EXTRUDED QUICK-COOKING RICE-LIKE PRODUCT

### FIELD OF THE INVENTION

The present invention is concerned with an extruded quick-cooking rice-like product. More particular, the present invention is concerned with a quick-cooking rice product made from extruding ungelatinized rice flour.

"Quick-cooking" food products are conventionally prepared by boiling in water or exposing the same to steam until a desired amount of moisture is absorbed by the product. The so-called "quick-cooking" varities of these products are typically prepared by pre-cooking to a predetermined moisture content and subsequently drying to a stable condition for sale. Such products can then be recooked particularly rapidly because their pretreatment has rendered them more hydroscopic, such that they reabsorb moisture at a faster rate than during conventional cooking.

Several "quick-cooking" rice processes have been developed during the past decades. These include fabricating quick-cooking rice from broken grades of rice, products for specialized applications, minor modifications and multiple step treatments applied to previously known methods, microwave heating, and adoption of quick-cooking white rice processes to brown rice.

For instance, U.S. Pat. No. 2,992,921 describes a process for rendering brown rice "quick-cooking" which comprises blowing hot air at a temperature of 232.2°C to 315°C (450 to 600°F) and a velocity of about 833.3 metres (2,500 feet) per minute through the brown rice for a period of 10 to 30 seconds and immediately thereafter cooling the rice with relatively cool air to prevent overcooking. It was also indicated in the patent that the treated product was easy to cook. Also, U.S. Pat. No. 3,157,514 describes another method wherein the rice is hydrated below the gelatinization temperature to a moisture content of between 25% and 40% followed by steaming at a temperature above about 55°C, and finally completing the hydrating process by exposing the steamed rice to alternate steam and water treatments at a temperature below 55°C.

U.S. Pat. No. 4,133,898 discloses a process wherein rice is cooked by boiling in water for a predetermined length of time and subsequently drying in a centrifugal fluidizing bed dryer. If desired, the rice after cooking but before drying can be treated with water at an ambient temperature to prevent overcooking. U.S. Pat. No. 4,473,593 fluidizes the particular food product using a steam atmosphere as the fluidizing medium instead of water, claiming that fluidizing with steam minimizes sticking and clumping of the food product.

Several attempts have been made to reform rice by extrusion. For instance, U.S. Pat. No. 4,446,163 by Galle et al. discloses the manufacture of rice or starch-based products from either broken rice or whole rice, which is first ground, then hydrated and extruded to form individual pieces. These individual pieces are then exposed to substantially saturated

- 3 -  **0226375**

steam at super atmospheric pressure above about 3.447 kPa (0.5 psig) in an autoclave for a time sufficient to gelatinize a major portion of said starch. U.S. Pat. No. 4,325,976 discloses a process for producing a reformed rice product by the cold extrusion of a dough formed from a composition comprising a mixture of pregelatinized and ungelatinized rice flour, sodium chloride, and fat in powdered form. The extrudate is sliced at the extruder face to obtain simulated rice grains. The simulated grains are then dried at an elevated temperature. The reformed rice product produced in this manner rehydrates in water in about three minutes thereby significantly reducing the time required to prepare a finished product. The drawback of the above reformed rice is its rapid rate of disintegration after rehydration.

U.S. Pat. No. 4,521,436 by Fulger discloses a rehydratable rice product made from ungelatinized rice flour in a single step, without the addition of sodium chloride and powdered fats and through a cooking extruder. Fulger, however, discloses the use of an aerating agent to develop a porous structure in the expanded product which facilitates rehydration and reduces the preparation time. This concept was also disclosed in U.S. Pat. No. 4,440,794 wherein an aerating agent was also used in the preparation of an instant rice pudding mix. These references specifically add aerating agents to develop more porous structure, making rehydration more facile. The products upon rehydration disintegrate rapidly and have a mushy texture.

All of these prior art processes require large amounts of energy to accomplish the preparation of "quick-cooking" food products. In the non-reform cases, either alternate heating and cooling cycles are utilized or excess moisture is added to the rice during the cooking process. Whereas, in the case of reformed products, additional ingredients are added to facilitate the extrusion process, and in some cases aerating agents or gas forming ingredients are added to facilitate expansion and aid rehydration. None of the above products have a texture and shape similar to commodity rice particular in cases when the starting material is rice flour.

We have found that a hydrated "quick-cooking" product can be made from ungelatinized rice flour without the addition of sodium chloride, powdered fat, and an aerating agent, yet utilizing a cooker extruder.

The object of the present invention is, therefore, to provide a "quick-cooking" reformed rice product.

A further object of the present invention is to provide an extruded expanded rice product without the addition of gas forming ingredients and without gasifying a zone of the extruder.

A still further object of the invention is to provide a process which is straight forward and can utilize existing manufacturing equipment.

Other objects of the present invention will become more apparent from the following detailed description which set forth by way of illustration and example, certain embodiments of the present invention.

SUMMARY OF THE INVENTION

The present invention is concerned with a process for preparing a quick-cooking parboil rice-like product that absorbs its own volume in water in about 5 minutes and maintains its textural integrity for from 20 to 30 minutes without gasifying the extruder zone, and without the addition of a gas forming ingredients, fat or sodium chloride, comprising the steps of: feeding a composition comprising rice flour, into an extruder; extruding said composition for a time and at a temperature and pressure effective to substantially gelatinize the starch fraction of the rice flour and denature the protein to produce an extrudate; and drying said extrudate to form a rehydratable rice-like product.

The present invention is also concerned with an extruded expanded quick-cooking parboil rice-like product that absorbs its own volume in water in about 5 minutes, and maintains it textural integrity for from 20 to 30 minutes comprising from 99 to 100% rice flour.

DETAILED DESCRIPTION

In the present invention a rice flour is extruded under conditions effective to gelatinize the starch fraction of said rice flour and to form extrudates. The extrudates formed are dried and packaged. The product formed hydrates in 5 minutes, retains its textural integrity for extended periods of time, and has organoleptic qualities similar to cooked, parboiled rice products.

In preparing the rice-like product a composition comprising rice flour, an optional starch complexing agent and an optional gum is fed into an extruder. The rice flour is generally ungelatinized and may be of the long grain, medium grain, or short grain variety, or combination thereof. Generally the rice flour has a moisture content of 10%. When long grain rice is used a finish product having a firmer texture is produced, while medium grain produces a softer texture, similar to that which is characteristic of oriental rice. Short grain rice generally produces an even softer, sticky product similar to a rice-pudding type. Suitably, the rice flour is employed in amounts from 95 percent by weight to 100 percent by weight of the composition and preferably from 98 percent by weight to 99.5 percent by weight.

Optionally, a starch complexing agent may be added to the rice flour. This starch complexing agent complexes the starch during cooking and extruding, resulting in a less sticky and firmer product which is more resistant to overcooking. The amount of starch complexing agent added is generally from 0 to 5 percent by weight of the composition, and preferably from 0.5 to 2 percent by weight. Suitable starch complexing agents include, but are not limited to, glyceral monostearate, sodium staryl lactilate, or other suitable mono diglycerides and mixtures thereof.

Optionally, the rice flour may also contain an edible gum. The gum acts as a binding agent, which facilitates rehydration and maintains the shape of the rehydrated product. Suitable gums include xanthan gum, CMC, caragenen, alginetes and mixtures thereof. Depending on the formula, the gum may be employed in amounts of from 0 to 2% by weight of the composition and preferably in amounts of from 0 to 0.2% by weight.

The composition is then extruded for a time and at a temperature and pressure effective to substantially gelatinize the starch fraction of the rice flour and denature the protein to produce an extrudate. The rice flour and water are first mixed and kneaded to prepare a homogenous dough. This kneading is carried out in a first stage or section of the extruder which has a temperature below the cooking range of the ingredients. The composition is fed into the extruder at a rate of 56.8 kg (125 lbs) per hour and water is fed into the first stage at a rate of about 104 to 150 cc/min. and preferably about 140 cc/min. The kneaded dough then passes into the cooking section of the extruder.

In the cooking section of the extruder, the dough is subjected to extrusion temperatures effective to substantially gelatinize the starch molecules and denature the protein. Suitable extrusion temperatures should range from between about 29.4°C (85°F) and 104.4°C (220°F) depending on the barrel temperature of the particular cooking zone. For instance, in the first cooking zone the barrel temperature should range from about 32.2°C (90°F) to about 43.3°C (110°F) and preferably about 41.8°C (108°F); in the second and third cooking zones the barrel temperature should range from about 65.5°C (150°F) to about 79.4°C (175°F) and preferably about 73.9°C (165°F); in the fourth cooking zone the barrel temperature should range from about 87.8°C (190°F) to about 104.4°C (220°F) and preferably about 94.1°C (203°F); and finally in the last zone which is a cooling zone, the temperature should range from about 32.2°C (90°F) to about 40.5°C (105°F) and preferably about 36.3°C (98°F). The above conditions are necessary to produce the products of the present invention, and any variation therefrom will affect the quality of the final product.

Suitable head pressures within the extruder should range between about 6205 kPa (900 psig) and 10,342 kPa (1500 psig) and preferably about 8,963 kPa (1300 psig). Under these temperatures and pressure conditions, the protein hydrates and denature into a matrix and the starch gelatinizes.

The length of time the composition remains in the extruder is dependent upon the temperature and pressure conditions etc., but generally will be within the range of 15 to 60 seconds and preferably within the range of 25 to 50 seconds. The screw speed will also affect the length of time the composition remains in the extruder. Suitable screw speed ranges from 225 to 300 RPM and preferably about 250 RPM.

The work done on the dough is estimated to be within the range of 0.398 (0.05) to 0.95 MJ per kg (0.12 kilowatt hour per pound) feed and preferably with the range of 0.55 (0.07) and 0.95 MJ per kg (0.12 kilowatt hour per pound) feed and more preferably about 0.79 MJ per kg (0.10 kilowatt hour per pound) feed. These data are calculated by the amperage and voltage employed with the dough being run in the extruder less the amperage and voltage with the extruder running with water only. A single or twin screw extruder may be employed, with a twin screw extruder being preferred.

The temperature of the extrudate exiting the extruder may vary from about 87.8$^{\circ}$C (190$^{\circ}$F) to about 148.9$^{\circ}$C (300$^{\circ}$F) and preferably from about 93.3$^{\circ}$C (200$^{\circ}$F) to about 126.6$^{\circ}$C (260$^{\circ}$F). The extrudate as it exists the extruder may also be sized into suitable dimensions depending upon the product desired such as, dimensions simulating a rice grain. Sizing is preferably affected before drying but may be affected after drying. In the case of a rice product, the extrusion orifice is selected such that the extrudate is cut as it emerges from the orifice and sized to form individual rice particles. The product produced has a length ranging from 3 mm to 6 mm and a diameter of from 1.8 mm to 2.5 mm.

The extruded and cut particles have a moisture content of from about 15% to about 35% by weight percent, and preferably from about 20% to about 30%.

As the extrudate exits the extruder it expands. The degree of expansion ranges from 15 to 25% and preferably about 20%.

The extruded expanded product is dried utilizing conventional methods to form a product that rehydrates between 4 and 8 minutes and preferably in about 5 minutes. When rehydrated the finished product has a texture similar to cooked parboiled rice. Preferably, drying is effected in convection air at temperatures ranging from 65.5 (150) to 104.4$^{o}$C (220$^{o}$F).

In order to produce an extruded rice product with a texture similar to parboiled rice, ungelatinized long grain, medium grain or short grain rice flours were examined. A composition consisting of 100% ungelatinized long grain rice flour produces a suitable product. Products made with 100% ungelatinized medium grain rice flour produces a softer product, not typical of commercially available parboil rice. It should also be understood that combinations of ungelatinized long grain and medium grain rice flour were evaluated. The products produced were within acceptable range, but did not have as firm a texture as the commercially available parboiled rice.

An acceptable product according to the present invention can be produced by extruding ungelatinized long grain rice flour only, i.e. without the addition of a starch complexing agent and a gum. The product produced is negligably softer and rehydrates in the same time as when a starch complexing agent and a gum is added.

The following examples illustrate preferred embodiments of the invention.

## EXAMPLE I

Ingredients

| | | |
|---|---|---|
| Rice Flour - Long Grain | - | 99.10% |
| Rice Flour - Medium Grain | - | -- |
| Xanthum Gum | - | .15% |
| Mono and Diglyceride | - | .75% |

Raw materials were blended in a dry solids blender and fed to the inlet zone of the extruder as a dry premix. Dry premix was metered into the feed zone of the extruder at a rate of 56.8 kg/hr (125 lbs/hr). Simultaneously, water was metered to the same feed zone at a rate of 140 cc/min. The screw configuration of the extruder was designed to mix the water and dry material to form a dough. The dough was conveyed to a cooking zone where it was heated to 126.6°C (260°F) and the pressure was raised to 8,963 kPa (1300 psi). The cooked dough was finally extruded through a die having eight slots each having dimensions measuring 1 mm x 4 mm. The speed of the screw during processing was 250 RPM. The temperature of the product as it exits from the extruder was 119.4°C (249°F).

This material was cut by a rotating knife positioned on the die face to give particles resembling whole grain rice. The dimension of these particles was 2.5 mm x 6 mm. These particles fall onto a moving belt wherein room temperature air was drawn through to cool the product and remove some of the moisture. The particles travel on this belt for a period of 40 seconds wherein the moisture was reduced from 20% to 18% and the temperature reduced from 119.4°C (249°F) to 57.2°C (136°F). The rice particles were then transported to a continuous belt dryer where they were loaded to a bed depth of 0.63-1.26cm (1/4-1/2"). The dryer temperature in the first zone was set at 76.6°C (170°F) and the second zone was set at 98.9°C (210°F). The total drying time was 8 minutes.

The resulting product had a moisture of 8% and a density of 0.55 gm/cc. The final product was prepared by mixing equal volumes of boiling water and product and allowing same to rehydrate for five minutes. At the end of five minutes there was no excess water and the rice particles were fully rehydrated having texture and eating qualities similar to that of cooked parboiled rice.

### EXAMPLE II

Ingredients

| | | |
|---|---|---|
| Rice Flour - Long Grain | - | 74.15% |
| Rice Flour - Medium Grain | - | 25% |
| Xanthum Gum | - | 0.10% |
| Mono and Diglyceride | - | 0.75% |

This combination of long grain and medium grain rice flour was processed under conditions according to Example I.

The resulting product rehydrated in 5 minutes and disintegrated in 20 minutes.

WHAT IS CLAIMED IS:

1.  A process for preparing a quick-cooking extruded expanded parboil rice-like product that absorbs its own volume in water in about 5 minutes and maintains its textural integrity for from 20 to 30 minutes without gasifying an extruder zone and without the addition of a gas forming ingredient, fat or sodium chloride, comprising the steps of:

(a)  feeding a composition comprising rice flour into an extruder;

(b)  extruding the composition for a time and at a temperature and pressure effective to substantially gelatinize the starch fraction of the rice flour and denature the protein to produce an extrudate; and

(c)  drying the extrudate to form a rehydratable rice product.

2.  A process according to claim 1 wherein the rice flour is a member selected from a group comprising: ungelatinized long grain rice flour, ungelatinized medium grain rice flour.

3.  A process according to claim 1 wherein the amount of rice flour ranges from 95 to 100% by weight.

4.  A process according to either of claims 1 and 2 wherein the composition further comprises a starch complexing agent.

5.  A process according to claim 4 wherein the starch complexing agent is a mono and diglyceride.

6.  A process according to either of claims 4 and 5 wherein the amount of starch complexing agent ranges from 0 to 5% by weight.

7.  A process according to any one of claims 1 to 6 wherein the composition further comprises a gum.

8.  A process according to claim 7 wherein the gum is xanthan gum.

9.  A process according to either of claims 7 and 8 wherein the amount of gum ranges from 0 to 5% by weight.

0226375

10. A process according to any one of claims 1 to 9 wherein the composition is extruded for a time ranging from between 15 seconds and 60 seconds.

11. A process according to any one of claims 1 to 10 wherein the composition is extruded at a temperature ranging from between 10°C (50°F) and 121°C (250°F).

12. A process according to any one of claims 1 to 11 wherein the composition is extruded at a head pressure ranging from between 6205 kPa (900 psi) and 10342 kPa (1500 psi).

13. A process according to any one of claims 1 to 12 wherein the extrudate is sized prior to drying to form rice particles approximately the size of whole rice grain.

14. A process according to claim 13 wherein the composition is extruded through a circular die orifice having a diameter of 1.8 to 2.5 mm, and where the extruded composition is cut into length of from 3 to 6 mm.

15. A process according to any one of claims 1 to 14 further comprising injecting water into the extruder at a rate of 104 to 150 cc/minute.

16. A process according to claim 15 wherein the amount of water present in the extrudate ranges from between 15% to 35% by weight of the extrudate before drying.

17. A process according to any one of claims 1 to 16 wherein the work done on the composition as it passes through the extruder ranges from 0.398 to 0.95 MJ per kg (0.05 to 0.12 Kw hr./lb) feed.

18. A process according to claim 1 wherein the degree of expansion ranges from 15 to 25%.

19. An extruded expanded quick-cooling rice flour product in which the starch fraction is substantially gelatinised and the protein denatured comprising by weight 99 to 100% rice flour, 0 to 0.75% starch complexing agent and 0 to 0.25% gum which product will

- 14 -

0226375

absorb its own volume in water in about 5 minutes and maintain textural integrity for at least 20 minutes.

20. A composition according to claim 19 wherein the rice flour is selected from ungelatinized long grain rice flour, ungelatinized medium grain rice flour and combinations thereof.

21. A composition according to claim 20 wherein the rice flour is a combination of 75% ungelatinized long grain rice flour and 25% ungelatinized medium grain rice flour.

22. A composition according to any one of claims 19 to 21 wherein the starch complexing agent is a mono and diglyceride.

23. A composition according to any one of claims 19 to 22 wherein the gum is xanthan gum.

European Patent Office

**EUROPEAN SEARCH REPORT**

0226375

EP 86 30 9348

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| D,A | US-A-4 521 436 (W.C. LOU et al.) <br><br> * column 3, example 1, claims 1-18 * | 1-7,9 11,13 14 | A 23 L  1/182 <br> A 23 L  1/168 |
| D,A | US-A-4 325 976 (A.D. HARROW et al.) <br> * claims 1, 2, 11-13 * | 1,2 | |
| A | CA-A-1 028 194 (GENERAL FOODS LTD.) <br> * page 2, lines 9-29; page 5, lines 21-27; claim 1 * | 1 | |

---

TECHNICAL FIELDS SEARCHED (Int Cl 4)

A 23 L  1/00

The present search report has been drawn up for all claims

| Place of search | Date of completion of the search | Examiner |
|---|---|---|
| BERLIN | 17-02-1987 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82